Europäisches Patentamt

European Patent Office

Office européen des brevets

(11) **EP 1 147 960 A1**

(19)

(12) # DEMANDE DE BREVET EUROPEEN

(43) Date de publication:
**24.10.2001 Bulletin 2001/43**

(51) Int Cl.[7]: **B60T 8/00**

(21) Numéro de dépôt: **01108693.1**

(22) Date de dépôt: **06.04.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **18.04.2000 FR 0005070**
**10.08.2000 FR 0010542**

(71) Demandeurs:
• **Sociéte de Technologie Michelin**
**63000 Clermont-Ferrand Cedex 09 (FR)**

• **MICHELIN RECHERCHE ET TECHNIQUE S.A.**
**CH-1763 Granges-Paccot (CH)**

(72) Inventeur: **Pallot, Patrick**
**63000 Clermont-Ferrand (FR)**

(74) Mandataire: **Bauvir, Jacques**
**Michelin & Cie,**
**Service SGD/LG/PI-LAD**
**63040 Clermont-Ferrand Cedex 09 (FR)**

(54) **Actions sur la trajectoire d'un véhicule à partir de la mesure des efforts transversaux**

(57)    L'invention propose une méthode de régulation d'un système de contrôle de stabilité du véhicule basée sur les efforts existant au centre de chaque roue d'un véhicule. En effet, les actions du conducteur, que ce soit en braquage, accélération ou freinage, vont se traduire par des efforts (variations d'efforts) transmis par les pneus au sol. On propose de piloter les actionneurs du véhicule (antiroulis actif, couple moteur, couple freineur ou direction active) en utilisant des consignes en efforts issues des actions du conducteur. En fonction de la vitesse d'avancement du véhicule et de l'angle au volant (vitesse volant et accélération volant), l'invention propose une méthode pour exprimer en termes d'efforts les entrées du conducteur. Si les efforts réels mesurés ne correspondent pas aux efforts souhaités par le conducteur, le système actif compense cet écart en agissant sur les répartitions d'efforts dans le chassis.

Fig 1

## Description

La présente invention se rapporte aux systèmes de contrôle de stabilité d'un véhicule, popularisés notamment sous la désignation « ESP ».

Dans les systèmes de sécurité pour l'automobile, il faut être capable d'estimer en temps réel le comportement du véhicule. C'est la base des systèmes de contrôle de stabilité appelés ESP. Ces systèmes reposent pour le moment, entre autres choses, sur l'observation des déplacements du véhicule par l'installation de capteurs pour la mesure de l'accélération transversale du véhicule et pour la mesure de la vitesse de lacet du véhicule.

En roulage dans de bonnes conditions de sécurité, c'est à dire tant que la stabilité du véhicule n'est pas compromise, le véhicule obéit aux commandes du conducteur. Lorsque le conducteur, essentiellement par ses actions sur le volant, amène le véhicule au delà des conditions de stabilité, va apparaître un survirage ou un sous virage du véhicule. Le véhicule vire, c'est à dire effectue un mouvement de lacet, plus que souhaité par le conducteur (survirage), ou moins que souhaité par le conducteur (sous virage).

A partir d'un modèle mathématique du pneu et d'un modèle mathématique du véhicule, et sur la base de mesures délivrées par des capteurs observant les actions du conducteur du véhicule (angle au volant, sollicitation des freins, de l'accélérateur) de capteurs de vitesse des roues, et à partir des mesures d'accélération transversale et de vitesse de lacet, un système ESP calcule en permanence les efforts au centre des roues, et estime le potentiel d'adhérence de la route en fonction de l'accélération transversale. En outre, le système ESP évalue le comportement du véhicule, le compare au comportement souhaité par le conducteur, et corrige s'il détermine que le véhicule ne s'inscrit pas dans une trajectoire stable.

Or l'utilisation des modèles pneu peut introduire un certain nombre d'approximations dans le modèle. En outre, le fait de baser un système de contrôle sur les déplacements du véhicule induit nécessairement un déclenchement a posteriori, donc ne pouvant réagir qu'après un retard fonction de l'inertie du véhicule. On entend par là qu'un système ESP, parce que parmi ses variables d'état figurent des mesures d'accélération transversale et de vitesse de lacet du véhicule, doit d'abord mesurer ce qu'est le déplacement du véhicule avant de conclure que le déplacement est dans le domaine de stabilité ou non, et agir ensuite sur les actionneurs du véhicule en conséquence.

Le système ne détectera un déplacement du véhicule en discordance avec la commande imposée par le conducteur que d'autant plus tardivement que l'inertie du véhicule est grande, et la correction sera d'autant plus difficile que l'inertie est grande. Les actionneurs sont à l'heure actuelle essentiellement les freins du véhicule, commandés dans ce cas roue par roue et en dehors de l'action volontaire du conducteur, et l'effort moteur, que l'on peut diminuer automatiquement en agissant sur la gestion du moteur thermique.

Par ailleurs, la détection des mouvements de lacet nécessite l'utilisation de capteurs coûteux. Et les systèmes actuels sont dans l'obligation de faire une estimation de l'adhérence des roues sur la chaussée pour choisir les paramètres de déclenchement. Cette estimation est plus ou moins éloignée de la réalité.

L'invention a pour objectif de s'affranchir des inconvénients évoqués ci-dessus, et plus particulièrement de s'affranchir totalement de l'inertie d'un véhicule, pour pouvoir agir sur les actionneurs appropriés de façon à maintenir le véhicule dans une trajectoire stable, conforme aux ordres du conducteur en pilotant les actionneurs de manière à ce que les efforts réels au centre de chaque roue correspondent aux efforts souhaités.

L'invention propose une méthode de contrôle de la stabilité d'un véhicule qui présente l'avantage de pouvoir fonctionner même sans mesure de l'angle de lacet du véhicule. L'invention concerne un véhicule comportant une caisse et au moins un essieu avant et un essieu arrière. L'invention trouve un champ d'application privilégié, mais non limitative, lorsque chaque essieu comporte au moins deux liaisons au sol comprenant chacune une roue, lesdites liaisons au sol étant montées de part et d'autre du plan médian de symétrie du véhicule, par exemple dans le cas de véhicules de tourisme à quatre roues. Chaque liaison au sol comporte une roue, ayant en général un pneu ou, et ceci est équivalent dans le contexte de la présente invention, un bandage non pneumatique en contact avec le sol. Le véhicule est pourvu d'actionneurs pour agir sur les forces transmises au sol par chacune des roues, tels que freins, braquage des roues, éventuellement sélectivement roue par roue, répartition des charges portées par chacune des roues.

Selon un premier aspect de l'invention, la méthode comprend les étapes suivantes :

- relever en temps réel les poussées transversales « Y » agissant au centre de chacune des roues avant et arrière ;
- à partir des commandes du conducteur du véhicule, calculer pour chacune des roues les poussées transversales « $Y_{souhaitées}$ » souhaitées ;
- comparer les poussées transversales souhaitées aux poussées transversales relevées pour obtenir un signal d'erreur par rapport aux poussées transversales « $Y_{souhaitées}$ » souhaitées et,
- si les poussées d'un des essieux ne correspondent pas aux poussées transversales souhaitées, agir sur les actionneurs de façon à minimiser le signal d'erreur.

Les commandes du conducteur du véhicule visent à maintenir le véhicule sur une trajectoire en ligne droite, quelles que soient les perturbations du milieu environnant (par exemple rafales de vent transversales), ou visent à imposer au véhicule un déplacement transversal (changement de file pour dépasser sur autoroute) ou un braquage. Quels que soient les organes du véhicule sur les quels agit le conducteur (volant conventionnel, manette comme illustré par exemple dans la demande de brevet EP 0 832 807), cela revient en fait à vouloir imposer certaines poussées transversales, certaines variations de ces poussées. L'invention propose donc de relever en temps réel les poussées effectives, de les comparer ordres du conducteur traduits en poussées ou variations de poussées transversales, et à commander en conséquence des actionneurs appropriés disponibles sur le véhicule.

Selon un autre aspect de l'invention, en traduisant différemment les ordres du conducteur (en abordera plus en détail les raisons dans la suite), la méthode comprend les étapes suivantes :

- relever en temps réel les poussées transversales « Y » agissant au centre de chacune des roues avant et arrière, et calculer en temps réel le couple de lacet effectif imposé par les roues au véhicule ;
- relever en temps réel un signal au dispositif de commande du braquage et calculer le couple de lacet « $M_{souhaitée}$ » souhaité ;
- comparer les couples de lacet effectif et souhaité pour obtenir un signal d'erreur par rapport au couple de lacet « $M_{souhaitée}$ » souhaité et ;
- si le couple de lacet effectif est supérieur au couple de lacet souhaité, agir sur les actionneurs de façon à minimiser le signal d'erreur.

Ainsi, si la poussée de l'essieu avant sature, le véhicule sous vire parce que les efforts de poussée du train avant sont inférieurs aux efforts souhaités par le conducteur. Une action automatique, par exemple du genre de celle déjà connue en soi dans les systèmes ESP usuels (on présentera d'autres actions ci-dessous) permet d'obtenir une résultante d'efforts sur le châssis conforme aux souhaits du conducteur et permet donc d'éviter le sous virage.

Si au contraire c'est la poussée de l'essieu arrière qui sature la première, le véhicule sur vire parce que les efforts de poussée du train arrière sont inférieurs aux efforts souhaités par le conducteur. Ladite action automatique permet d'obtenir une résultante d'efforts sur le châssis conforme aux souhaits du conducteur et permet donc d'éviter le sur virage.

Ce qui a été exposé ci-dessus se rapporteà ce que l'on appelle communément le régime stationnaire (ou le régime établi). En considérant un régime transitoire typique d'une manoeuvre d'urgence (évitement, changement de file), la vitesse de sollicitation du volant peut être considérée comme équivalente à un couple de lacet souhaité sur le véhicule. Si le couple réel est inférieur au couple souhaité, le véhicule ne tourne pas assez. Si ce couple réel est supérieur au couple souhaité, le véhicule tourne trop .

Selon un autre aspect encore, en traduisant différemment les ordres du conducteur de façon à se rapprocher de la perception subjective d'un conducteur, la méthode comprend les étapes suivantes :

- Relever en temps réel les poussées transversales « Y » agissant au centre de chacune des roues avant et arrière,
- Relever en temps réel l'angle au volant,
- Calculer, en temps réel, l'accélérationde lacet à partir des poussées transversales « Y » et des distances séparant le centre de gravité du véhicule des roues avant et arrière,
- Calculer, en temps réel, le gain de la vitesse de lacet par rapport à la vitesse de sollicitation du volant,
- Si le gain de la vitesse de lacet est inférieur à un premier seuil bas, commander les actionneurs pour augmenter le braquage du véhicule, et si le gain de la vitesse de lacet est supérieur à un premier seuil haut, commander les actionneurs pour diminuer le braquage du véhicule.

On entend par « le gain de la vitesse de lacet » le rapport entre la variation de la vitesse de lacet et la variation d'angle au volant. Notons que la vitesse selon laquelle le conducteur agit sur le volant correspond à une demande d'accélération de lacet du véhicule. Si le gain de la vitesse de lacet est inférieur à un premier seuil bas, on considère que le véhicule devient dangereusement sous-vireur. La correction a pour but de l'aider à virer. Si le gain de la vitesse de lacet est supérieur à un premier seuil haut, on considère que le véhicule devient dangereusement sur-vireur. La correction a pour but de l'empêcher de trop virer. On peut déterminer expérimentalement les seuils. Pour fixer les idées, on peut adopter pour le premier seuil bas une valeur de l'ordre de 0.1, et pour le premier seuil haut, une valeur de l'ordre de 0.5.

La méthode selon l'invention permet, si les poussées d'un des essieux ne correspondent pas aux poussées transversales souhaitées, ou si le couple de lacet effectif est supérieur au couple de lacet souhaité, ou si le gain de la vitesse de lacet ne correspond pas à ce qui est jugé normal, d'envoyer un signal d'action sur les actionneurs pour à minimiser le signal d'erreur, sans qu'il soit nécessaire, pour établir un tel signal, sans qu'il ait été nécessaire de mesurer la vitesse de lacet du véhicule. Bien entendu, une telle méthode reste compatible avec la mesure de la vitessede lacet, notamment si l'on veut ajouter des éléments de redondance dans les calculs.

On a vu que l'invention propose une méthode de régulation d'un système de contrôle de stabilité du véhicule basée sur les efforts existant au centre de chaque roue d'un véhicule. En effet, les actions du conducteur, que ce soit en braquage, accélération ou freinage, vont se traduire par des efforts (variations d'efforts) transmis par les pneus au sol. Selon que ces variations d'efforts sont cohérentes par rapport aux ordres du conducteur, ou ne le sont pas, on peut conclure que le véhicule est stable, ou ne l'est plus. En partant des efforts au sol, on se trouve à la source des déplacements à venir. De la sorte, il est possible de corriger la trajectoire du véhicule bien plus tôt et un système ESP gagne en finesse de correction. La sécurité y gagne et le confort de l'automobiliste et de ses passagers est renforcé.

L'estimation de critères de stabilité en temps réel, sur la base d'efforts au sol, permet d'améliorer le contrôle de stabilité de la trajectoire d'un véhicule, la mesure directe de l'effort permettant, par exemple, d'observer finement la saturation du pneumatique quelle que soit l'adhérence, en détectant la survenance de la non linéarité entre la poussée transversale développée et l'angle de dérive du pneu considéré.

Ce qui cause la perte de stabilité du véhicule est principalement le fait que les pneumatiques ne sont plus en mesure de corriger la trajectoire, vu le mouvement du véhicule. Quelle que soit la poussée développée par les pneus, celle-ci ne pourra jamais contrer les forces d'inertie. Cela peut être dû à une faible adhérence (route mouillée, verglas, neige, sable, feuilles mortes), au fait que le pneu est utilisé par le conducteur dans des conditions non prévues (pneu à plat ou sous gonflé), ou au fait que le véhicule s'est immédiatement mis dans des conditions de dérive trop importante, qui dépassent les limites physiques d'un ou de plusieurs des pneumatiques. On peut dire que l'un des ou plusieurs des pneumatiques saturent.

On peut instrumenter les paliers de suspension comme proposé dans la demande de brevet JP60/205037, ce qui permet de connaître facilement les efforts longitudinaux et transversaux développés par le pneumatique par des mesures dans les paliers de suspension. En variante, le pneumatique lui-même est équipé de capteurs d'efforts du pneu au sol. On peut par exemple procéder à une mesure comme expliqué par le brevet DE 39 37 966 ou comme enseigné par le brevet US 5,864,056 ou par le brevet US 5,502,433.

Sur la base des efforts mesurés par l'une ou l'autre des méthodes ci-dessus, et à partir d'équations d'équilibre d'une liaison au sol, on peut donc facilement calculer les efforts au centre de chaque roue. On dispose ainsi en temps réel des 3 efforts X, Y et Z, ce qui permet notamment de procéder aux traitements du signal en Y pour les besoins expliqués dans le présent mémoire.

L'invention va être expliquée plus en détails dans la suite, à consulter avec les figures jointes dans lesquelles :

La figure 1 est un bloc diagramme illustrant l'invention,
La figure 2 est le schéma d'un véhicule bicycle,
Les figures 3a, 3b et 3c illustrent les poussées et couples de lacet résultant d'une commande de braquage en sinus croissant, sur sol sec, à 90 km/h,
La figure 4 illustre la trajectoire du véhicule dans le cas illustré aux figures 3a, 3b et 3c,
Les figures 5a, 5b et 5c illustrent les poussées et couples de lacet résultant d'une commande de braquage en sinus croissant, sur sol humide, à 90 km/h,
La figure 6 illustre la trajectoire du véhicule dans le cas illustré aux figures 5a, 5b et 5c,
Les figures 7a, 7b et 7c illustrent les poussées et couples de lacet résultant d'une commande de braquage pour un évitement, sur sol mouillé, à 90 km/h,
La figure 8 illustre la trajectoire du véhicule dans le cas illustré aux figures 7a, 7b et 7c,
Les figures 9a, 9b et 9c illustrent les poussées et couples de lacet résultant d'une commande de braquage pour un évitement sur sol mouillé à 90 km/h, pour un véhicule équipé d'un contrôle dynamique de la répartition de l'antiroulis,
La figure 10 illustre la trajectoire du véhicule dans le cas illustré aux figures 9a, 9b et 9c,
La figure 11 illustre l'évolution de la répartition de l'antiroulis pour stabiliser le véhicule.

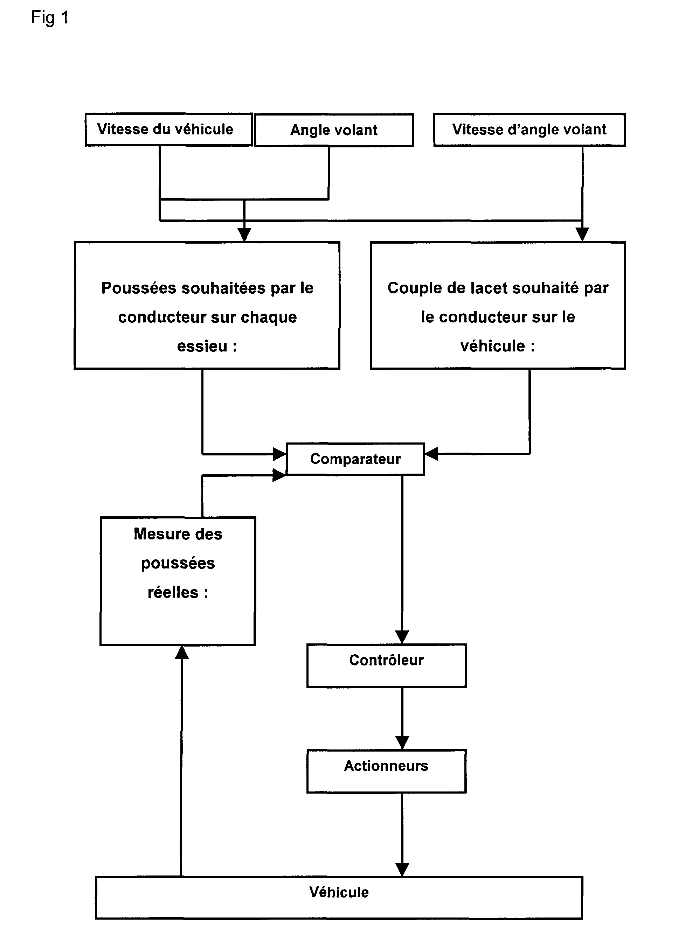

Partant de l'observation que, à une vitesse donnée, on peut interpréter un angle au volant imposé par le conducteur comme une demande de poussées transversales ou comme une demande de couple de lacet sur le véhicule. C'est ce qui est schématisé à la partie supérieure de la figure 1. Par ailleurs, on a vu qu'il est requis, pour la mise en oeuvre de cette invention, de disposer de mesures des poussées réelles (poussées transversales des pneumatiques ou bandages élastiques utilisés dans la liaison au sol). C'est ce qui est illustré dans le bloc de gauche, partant du « véhicule », a la figure 1. Le diagramme de la figure 1 superpose deux méthodes : soit on interprète les actions du conducteur en demande de poussées transversales que l'on compare aux poussées transversales mesurées, soit on interprète les actions du conducteur en demande de couple de lacet et l'on transforme les mesures de poussées transversales en couple de lacet mesuré pour effectuer la comparaison requise.

Supposons que les efforts de poussée du train avant sont inférieurs aux efforts souhaités par le conducteur. Une action automatique permet d'obtenir une résultante d'efforts sur le châssis conforme aux souhaits du conducteur et permet donc d'éviter le sous virage.

En variante ou en complément d'une action sur les freins, une action sur un moyen de braquage complémentaire, imposé par exemple au moyen d'un moteur pas à pas irréversible inséré dans la colonne de direction, permet aussi de se rapprocher de la résultante d'efforts sur le châssis conforme aux souhaits du conducteur. Une autre possibilité de réalisation de l'action sur un moyen de braquage consiste par exemple à envoyer les ordres de commande appropriés au contrôleur décrit dans le brevet US 5,884,724.

En variante ou en complément encore des actions sur les freins ou sur la direction évoquées ci-dessus, une action sur la répartition d'antiroulis entre l'essieu avant et l'essieu arrière permet aussi d'agir sur les poussées développées respectivement par les essieux avant et arrière.

En effet, lorsqu'un véhicule s'écarte de la trajectoire souhaitée par le conducteur, c'est que l'un l'autre ou plusieurs des pneumatiques deviennent incapables de développer le surcroît de poussée transversale qu'il aurait fallu développer pour compenser les forces d'inerties. On peut dire que le ou les pneumatiques considérés saturent. En fait, ce phénomène de saturation, lorsqu'il débute, concerne la plupart du temps un seul pneumatique d'un seul essieu. De ce fait, l'un des essieux devient incapable de développer la pousser transversale attendue et le véhicule survire ou sousvire, selon que la saturation concerne l'essieu arrière ou l'essieu avant.

Par ailleurs, l'on sait qu'en virage, la force centrifuge surcharge les pneumatiques extérieures au virage. La répartition de cette surcharge entre l'essieu avant et l'essieu arrière dépend des caractéristiques d'antiroulis de la suspension du véhicule.

En diminuant la part d'effort d'antiroulis développé par l'essieu comportant le pneumatique dont la poussée transversale sature en premier, non seulement on permet à l'autre pneu du même essieu de développer un poussée transversale plus grande car à une charge verticale plus grande, mais aussi on va s'approcher de, voire atteindre la saturation d'un pneu de l'autre essieu, plafonnant ou diminuant d'autant les poussées transversales développées par l'autre essieu.

Si au contraire c'est la poussée de l'essieu arrière qui sature la première, le véhicule sur vire parce que les efforts de poussée du train arrière sont inférieurs aux efforts souhaités par le conducteur. Une action automatique sur les freins ou sur un moyen de braquage complémentaire ou sur la répartition d'antiroulis permet d'obtenir une résultante d'efforts sur le châssis conforme aux souhaits du conducteur et permet donc d'éviter le sur virage.

Les règles de pilotage des actionneurs exposées ici sont schématisées par le bloc « Contrôleur » à la figure 1, lequel commande le ou les « actionneurs » dont il a été question ci-dessus.

Les paragraphes ci-dessus se rapportent à ce que l'on appelle communément le régime stationnaire (ou le régime établi). En considérant un régime transitoire typique d'une manoeuvre d'urgence (évitement, changement de file), la vitesse de sollicitation du volant est plutôt considérée comme équivalente à un couple de lacet souhaité sur le véhicule. Si le couple réel est inférieur au couple souhaité, le véhicule ne tourne pas assez. Si ce couple réel est supérieur au couple souhaité, le véhicule tourne trop . Le contrôleur agit alors de façon appropriée sur l'un ou l'autre ou plusieurs des actionneurs possibles que sont les freins ou sur un moyen de braquage complémentaire ou sur la répartition d'antiroulis permet d'obtenir un couple de lacet imposé au châssis conforme aux souhaits du conducteur.

Adoptons les expressions conventionnelles suivantes :

Poussée de l'essieu avant souhaitée : $Y_1 souhaité$
Poussée de l'essieu arrière souhaitée : $Y_2 souhaité$
Couple de lacet souhaité : $M_{z\ souhaité}$

$\psi$ l'angle de lacet du véhicule,
$\delta$ l'angle de dérive du véhicule,
$\alpha_c$ l'angle de braquage d'une roue.
$\gamma t$ l'accélération transversale

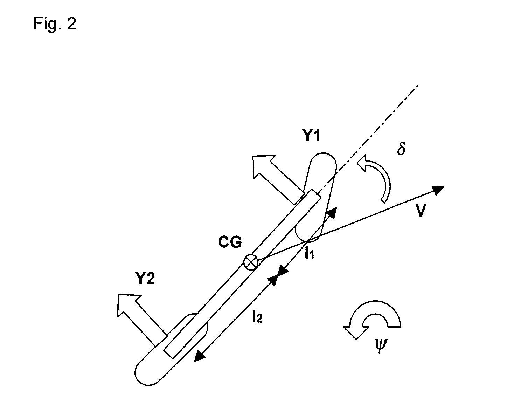

Pour simplifier l'exposé des phénomènes physiques en cause, on considère ci-dessous un véhicule bicycle (voir figure 2). On ramène au centre de chaque essieu les poussées transversales s'exerçant au niveau des roues de chaque essieu considéré. L'homme du métier est familier de cette approche courante et sait, au besoin, ce qu'il faut faire pour traiter des véhicules à essieux de roues.

Les équations du bicycle sont :

- $$M\gamma_t = MV(\dot{\delta}+\dot{\psi}) = Y_1 + Y_2 \tag{1}$$

où M est la masse du véhicule, V la vitesse longitudinale du véhicule, $Y_1$ la poussée transversale sur l'essieu avant, $Y_2$ la poussée transversale sur l'essieu arrière, l'équation (1) exprimant que les poussées transversales équilibrent l'accélération transversale,

- 

$$I_z \ddot{\psi} = l_1 Y_1 - l_2 Y_2 \quad (2)$$

où $I_Z$ est l'inertie de lacet, $l_1$ la distance de l'essieu avant au centre de gravité, $l_2$ la distance de l'essieu arrière au centre de gravité, l'équation (2) exprimant l'équilibre des moments.

Le mouvement de corps rigide du bicycle et le braquage des roues de l'essieu avant permet d'exprimer les dérives des pneus à l'avant et à l'arrière selon :

Dérive du train avant:

$$\delta_1 = \delta + l_1 \frac{\dot{\psi}}{V} - \alpha_C \qquad (3)$$

Dérive du train arrière:

$$\delta_1 = \delta - l_2 \frac{\dot{\psi}}{V} \qquad (4)$$

La grandeur l1 (respectivement l2) est la distance de 1' essieu avant (respectivement arrière) au centre de gravité CG du véhicule. La géométrie du véhicule est présentée sur la figure 2.

Ces dérives des pneus entraîne des efforts de poussées sur le bicycle :

$$Y_1 = -D_1 \delta_1 \qquad (5)$$

$$Y_2 = -D_2 \delta_2 \qquad (6)$$

La grandeur D1 (respectivement D2) est la rigidité de dérive globale du pneu du train avant (respectivement arrière).

En remplaçant les équations 3 et 4 dans 5 et 6, on obtient:

$$Y_1 = -D_1 \left( \delta + l_1 \frac{\dot{\psi}}{V} - \alpha_C \right) \quad (7)$$

$$Y_2 = -D_2 \left( \delta - l_2 \frac{\dot{\psi}}{V} \right) \quad (8)$$

En remplaçant les équations (7) et (8) dans les équations (1) et (2), on obtient un système qui ne s'exprime qu'en fonction de la vitesse de lacet (et de sa dérivée) , de l'angle de dérive (et sa dérivée) et des caractéristiques du véhicule:

$$MV(\dot{\delta}+\dot{\psi}) = D_1\left(\delta + \frac{l_1\dot{\psi}}{V} - \alpha_c\right) + D_2\left(\delta - \frac{l_2\dot{\psi}}{V}\right) \quad (1\ bis)$$

$$I_z\ddot{\psi} = l_1\left(D_1\left(\delta + \frac{l_1\dot{\psi}}{V} - \alpha_c\right)\right) - l_2\left(D_2\left(\delta - \frac{l_2\dot{\psi}}{V}\right)\right) \quad (2\ bis)$$

Par une transformation de Laplace, on peut exprimer les fonctions de transfert entre la vitesse de lacet et l'angle au volant, entre la dérive de caisse et l'angle au volant. La partie statique (c'est à dire la partie relative à une fréquence nulle) de cette fonction de transfert s'exprime alors simplement en fonction des caractéristiques du véhicule (coefficient de proportionnalité) et de la vitesse d'avancement :

$$\dot{\psi} = \frac{1}{l_1 + l_2}\ \frac{V}{1 + \dfrac{V^2}{\dfrac{D_1 D_2(l_1 + l_2)^2}{M(D_2 l_2 - D_1 l_1)}}}\alpha_c \qquad (9)$$

$$\delta = \frac{1}{l_1 + l_2}\ \frac{l_2 - \dfrac{l_1 M V^2}{D_2(l_1 + l_2)}}{1 + \dfrac{V^2}{\dfrac{D_1 D_2(l_1 + l_2)^2}{M(D_2 l_2 - D_1 l_1)}}}\alpha_c \qquad (10)$$

Ces expressions peuvent se simplifier en introduisant une grandeur Vc, appelée vitesse critique, assimilable à une vitesse et dépendant des caractéristiques du véhicule (masse supportée par l'essieu avant M1, masse supportée par l'essieu arrière M2, distances l1 et l2) et de sa monte pneumatique:

$$V_c^{\,2} = \frac{D_1 D_2(l_1 + l_2)^2}{M(D_2 l_2 - D_1 l_1)} = \frac{D_1 D_2(l_1 + l_2)}{D_2 M_1 - D_1 M_2} = \frac{l_1 + l_2}{\dfrac{M_1}{D_1} - \dfrac{M_2}{D_2}} \qquad (11)$$

Les expressions (9) et (10) deviennent:

$$\dot{\psi} = \frac{1}{l_1 + l_2}\ \frac{V}{1 + \dfrac{V^2}{V_c^{\,2}}}\alpha_c$$

$$\delta = \frac{1}{l_1 + l_2}\ \frac{l_2 - \dfrac{l_1 M V^2}{D_2(l_1 + l_2)}}{1 + \dfrac{V^2}{V_c^{\,2}}}\alpha_c$$

Ces expressions peuvent être introduites à nouveaux dans les équations (3) et (4) puis dans les équations (5) et (6) pour obtenir les efforts souhaités par le conducteur :

$$Y_1 désiré = \frac{M_1}{l_1 + l_2} \frac{V^2}{1 + \frac{V^2}{Vc^2}} \alpha_c \qquad (12)$$

$$Y_2 désiré = \frac{M_2}{l_1 + l_2} \frac{V^2}{1 + \frac{V^2}{Vc^2}} \alpha_c \qquad (13)$$

On voit que ces formules expriment le fait que la demande de poussées transversales résultant des actions du conducteur ne dépend que de la commande ($\alpha_c$) elle même, de

la vitesse du véhicule (V) et d'autres paramètres qui sont tous fonctions du véhicule lui-même (c'est à dire qui décrivent le véhicule).

Enfin en dérivant l'équation (9) et en multipliant l'accélération de lacet par l'inertie de lacet, on obtient le couple de lacet Mz souhaité:

$$\ddot{\psi} = \frac{1}{l_1 + l_2} \frac{V}{1 + \frac{V^2}{Vc^2}} \dot{\alpha}_c$$

$$M_{désiré} = I_Z \ddot{\psi} = \frac{I_z}{l_1 + l_2} \frac{V}{1 + \frac{V^2}{Vc^2}} \dot{\alpha}_c \quad (14)$$

De même, la formule (14) exprime le fait que la demande de couple de lacet résultant des actions du conducteur ne dépend que de la commande ($\alpha_c$) elle même, de la vitesse du véhicule (V) et d'autres paramètres qui sont tous fonctions du véhicule lui-même (c'est à dire qui décrivent le véhicule).

On peut même traduire les variations de commandes au volant comme des demandes de variations d'efforts dans les trains :

$$\dot{Y}_{1\,désiré} = \frac{M_1}{l_1 + l_2} \frac{V^2}{1 + \frac{V^2}{Vc^2}} \dot{\alpha}_c$$

$$\dot{Y}_{2\,désiré} = \frac{M_2}{l_1 + l_2} \frac{V^2}{1 + \frac{V^2}{Vc^2}} \dot{\alpha}_c$$

On suppose que l'on peut mesurer à chaque instant les poussées transversales Y pour toutes les roues, les variations desdites poussées Y, et les variations d'angle au volant On propose de déclencher un système de contrôle de trajectoire dès que L'écart entre les efforts souhaités et les efforts réels mesurés est trop important. Le critère de stabilité ainsi proposé exprime le fait que le véhicule reste stable tant que cet écart est faible (adéquation entre le souhait du conducteur et la réalité).

Expliquons maintenant comment en peut construire un critère de stabilité du véhicule en procédant à une estimation les gains suivants :

- le gain de la vitesse de lacet :

$$\frac{\partial \dot{\psi}}{\partial \alpha_c},$$

- le gain de la vitesse de dérive :

$$\frac{\partial \dot{\delta}}{\partial \alpha_c}$$

- le gain de l'accélération transversale :

$$\frac{\partial \gamma_t}{\partial \alpha_c}$$

Les différents gains sont exprimés par rapport à la vitesse de braquage des roues.

Les équations du bicycle sont données dans les équations (1) et (2) ci dessus

On peut introduire l'angle de braquage d'une roue dans les dérivées temporelles suivantes :

$$\dot{\delta} = \frac{\partial \delta}{\partial t} = \frac{\partial \delta}{\partial \alpha_c} \frac{\partial \alpha_c}{\partial t} \tag{15}$$

$$\ddot{\psi} = \frac{\partial \dot{\psi}}{\partial t} = \frac{\partial \dot{\psi}}{\partial \alpha_c} \frac{\partial \alpha_c}{\partial t} \tag{16}$$

On suppose que l'on peut mesurer à chaque instant les poussées transversales Y pour toutes les roues, les variations desdites poussées Y, et les variations d'angle au volant.

Par remplacement dans l'équation (2) de l'expression (16), on exprime le gain de la vitesse de lacet en fonction des efforts :

$$I_z \frac{\partial \dot{\psi}}{\partial \alpha_c} \dot{\alpha}_c = I_1 Y_1 - I_2 Y_2,$$

d'où l'on déduit immédiatement :

$$\frac{\partial \dot{\psi}}{\partial \alpha_c} = \frac{I_1 Y_1 - I_2 Y_2}{I_z \dot{\alpha}_c} \tag{17},$$

soit le gain de la vitesse de lacet par rapport à la vitesse de braquage des roues.

Pour faire un lien avec la perception « subjective » du conducteur, on propose de remonter aux gains au volant ($\alpha_v$ étant l'angle de braquage du volant) en introduisant la démultiplication de la commande de direction : $\alpha_v = \alpha_C \times n$. Le gain de vitesse de lacet devient :

$$\frac{\partial \dot{\psi}}{\partial \alpha_v} = \frac{1}{n} \frac{\partial \dot{\psi}}{\partial \alpha_c} = \frac{1}{n} \frac{I_1 Y_1 - I_2 Y_2}{I_z \dot{\alpha}_c} \tag{18}$$

On a déterminé expérimentalement que la zone habituelle de conduite d'un conducteur est comprise dans la fourchette suivante :

$$0.1 < \frac{\partial \dot{\psi}}{\partial \alpha_v} < 0.5$$

On propose de déclencher un système de contrôle de trajectoire dès que le gain de la vitesse de lacet en fonction de l'angle au volant (voir équation (18)) est trop faible (sous - virage) ou trop fort (sur - virage). Le critère de stabilité ainsi proposé exprime le fait que le véhicule reste stable tant que le gain reste borné.

Dans un autre mode de réalisation, on peut établir pour critère le gain d'accélération transversale en fonction de l'angle au volant.

De l'équation (1), en différenciant par rapport à l'angle de roue, on déduit :

$$MV(\frac{\partial \dot{\delta}}{\partial \alpha_c} + \frac{\partial \dot{\psi}}{\partial \alpha_c} = \frac{\partial Y_1}{\partial \alpha_c} + \frac{\partial Y_2}{\partial \alpha_c}$$

En introduisant le gain de la vitesse de lacet dans l'équation ci-dessus, on obtient :

$$MV(\frac{\partial \dot{\delta}}{\partial \alpha_c} + \frac{l_1 Y_{Av} - l_2 Y_{Arr}}{I_z \dot{\alpha}_c}) = \frac{\partial Y_1}{\partial \alpha_c} + \frac{\partial Y_2}{\partial \alpha_c}$$

$$\frac{\partial \dot{\delta}}{\partial \alpha_c} = \frac{\frac{\partial Y_1}{\partial \alpha_c} + \frac{\partial Y_2}{\partial \alpha_c} - MV\frac{l_1 Y_1 - l_2 Y_2}{I_z \dot{\alpha}_c}}{MV}$$

$$\frac{\partial \dot{\delta}}{\partial \alpha c} = \frac{\frac{\partial Y_1}{\partial t} + \frac{\partial Y_2}{\partial t} - MV\frac{l_1 Y_1 - l_2 Y_2}{I_z}}{MV\dot{\alpha}_c}$$

$$\frac{\partial \dot{\delta}}{\partial \alpha_c} = \frac{1}{MV\dot{\alpha}_c}\left(\frac{\partial Y_1}{\partial t} + \frac{\partial Y_2}{\partial t}\right) - \frac{l_1 Y_1 - l_2 Y_2}{I_z \dot{\alpha}_c},$$

soit l'expression du gain de vitesse de dérive.

En additionnant les deux gains, on trouve le gain d'accélération transversale par rapport à la vitesse de braquage des roues :

$$\frac{\partial \gamma_t}{\partial \alpha_c} = \frac{1}{M\dot{\alpha}_c}\left(\frac{\partial Y_1}{\partial t} + \frac{\partial Y_2}{\partial t}\right)$$

Pour faire un lien avec la perception « subjective » du conducteur, comme ci-dessus, on remonte aux gains au volant ($\alpha_v$ étant l'angle de braquage du volant) en introduisant la démultiplication de la commande de direction : $\alpha_V = \alpha_C \times n$. Le gain d'accélération transversale devient :

$$\frac{\partial \gamma_t}{\partial \alpha_v} = \frac{1}{nM\dot{\alpha}_v}\left(\frac{\partial Y_1}{\partial t} + \frac{\partial Y_2}{\partial t}\right) \quad (19)$$

On propose de déclencher un système de contrôle de trajectoire dès que le gain de 1' accélération transversale en fonction de l'angle au volant (voir équation (19)) est trop faible (sous - virage) ou trop fort (sur - virage). Le critère de stabilité ainsi proposé exprime le fait que le véhicule reste stable tant que le gain reste borné.

Bien entendu, on pourrait aussi exprimer un gain en accélération transversale, ce qui serait une expression différente du même phénomène physique que le gain en vitesse de lacet. On pourrait de façon équivalente construire un critère comparable à partir du gain en vitesse de dérive.

Une simulation de la dynamique d'un véhicule dans des manoeuvres typiques est présentée à l'aide des figures suivantes. Le modèle de simulation utilisé est un modèle quadricycle avec 7 degrés de liberté, permettant de traduire l'équilibre du véhicule en lacet, tangage, roulis, et rotation des quatre roues. Les trois simulations présentées illustre un véhicule dont les caractéristiques sont celles d'une Golf, roulant à une vitesse de 90 km/h.

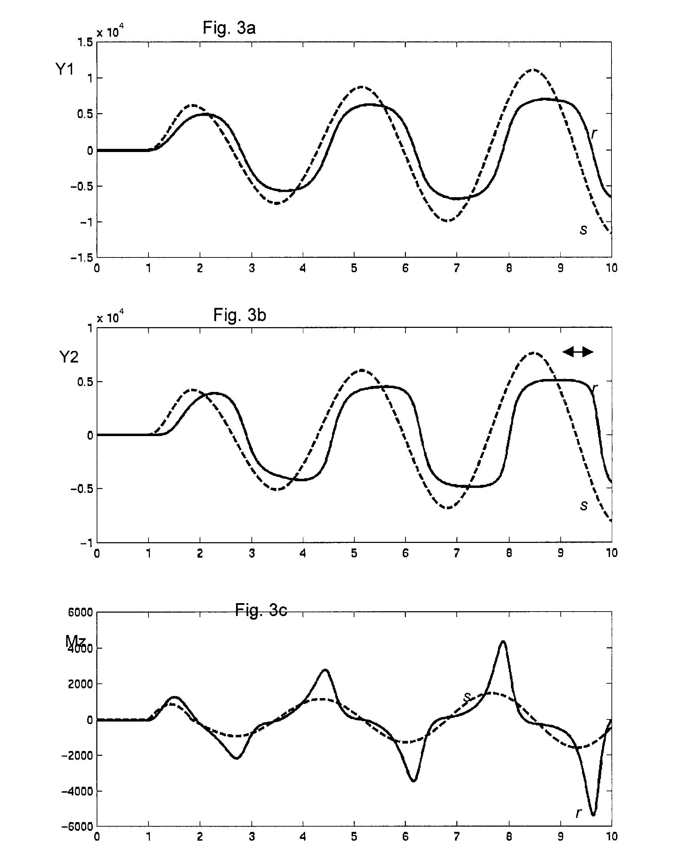

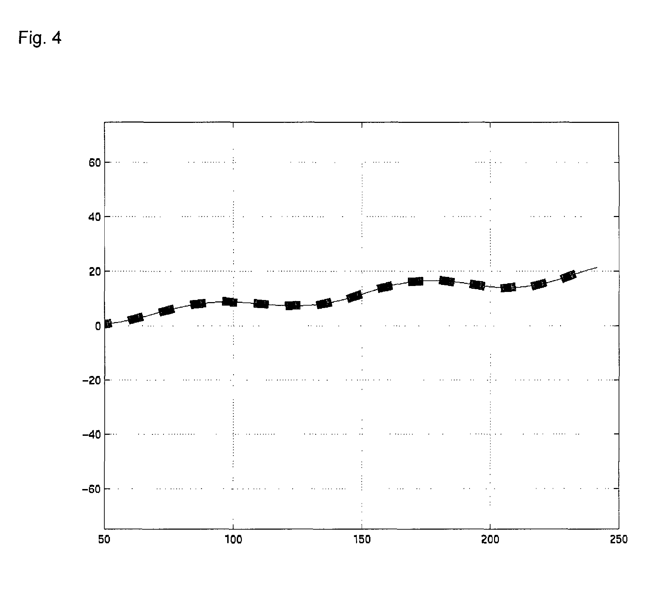

Dans la première simulation (figures 3a, 3b et 3c), on entre comme consigne volant, une sollicitation en sinus de fréquence 0.5 Hz, d'amplitude croissante, sur sol sec. A toutes les figures illustrant des poussées (Y) ou des couples de lacet (Mz), les courbes en trait continu, désignées par « r », représentent les valeurs réelles, alors que les courbes en trait interrompu, notées « s », représentent les valeurs souhaitées par le conducteur. Les courbes présentées montrent l'écart entre la somme des deux poussées d'un train (train avant ou train arrière selon les indices « 1 » ou « 2 » des figures) et l'effort souhaité par le conducteur, au sens des formules (12) (13) et (14). On peut noter la saturation des efforts du pneumatique par rapport aux attentes du conducteur et le déphasage entre les efforts réels et les efforts attendus. La figure 4 symbolise le véhicule (visualisé par un rectangle) sur la trajectoire décrite par son centre de gravité (illustrée par une courbe continue). Le déphasage entre l'attitude réelle du véhicule et la trajectoire souhaitée peut être observé en notant, dans certaines des positions successives illustrées à la figure 4, l'angle plus ou moins grand entre l'orientation du véhicule et la tangente à la trajectoire au centre de gravité du véhicule.

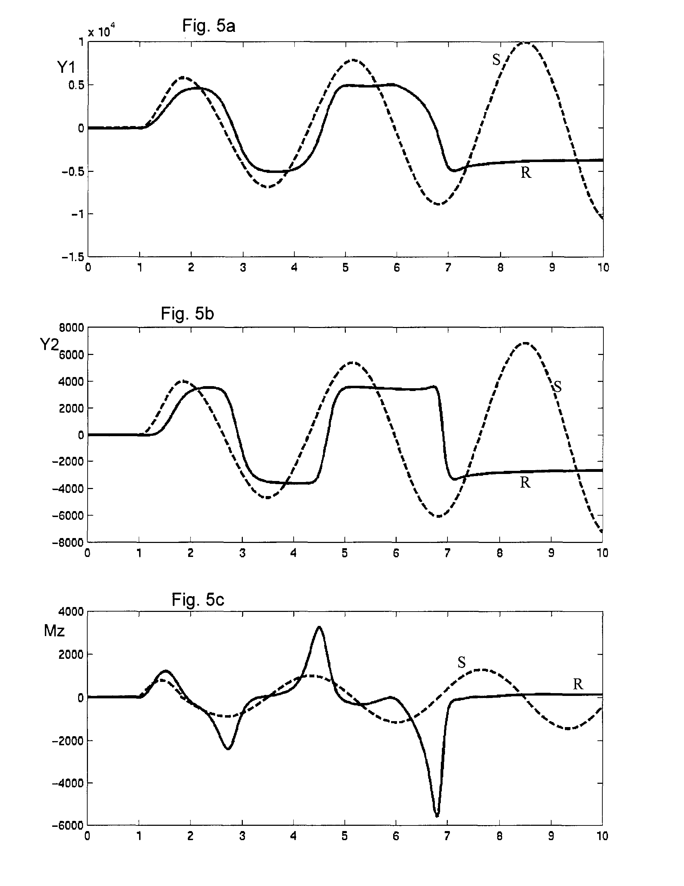

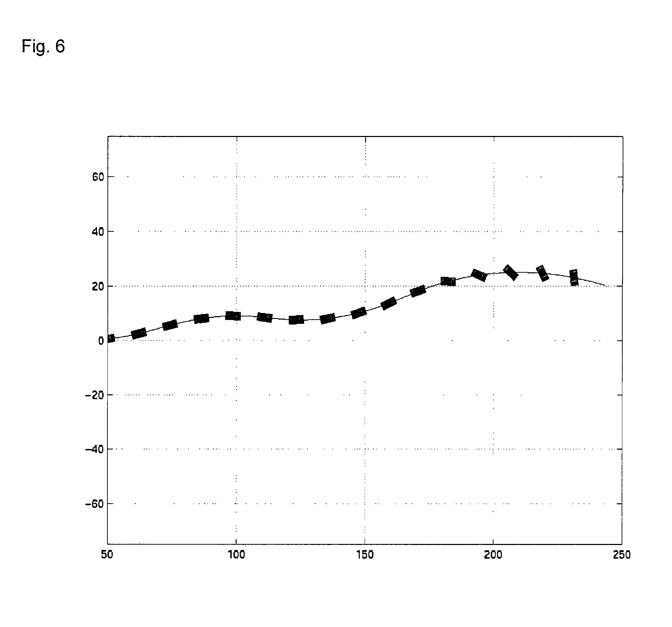

Dans la seconde simulation (figures 5a, 5b et 5c), on entre comme consigne volant, une sollicitation en sinus de fréquence 0.5 Hz, d'amplitude croissante, sur un sol mouillé, jusqu'à perte de contrôle du véhicule en survirage. Cette perte de contrôle peut être anticipée dans l'écart entre le couple de lacet souhaité et le couple de lacet réel. Le couple de lacet réel est beaucoup trop important et fait pivoter le véhicule, comme on le constate sur la trajectoire (figure 6).

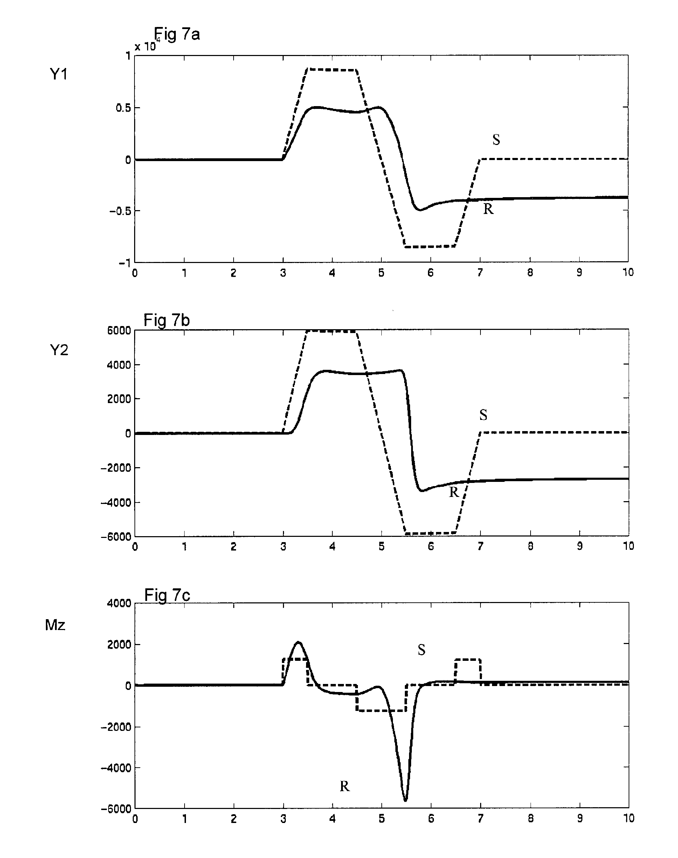

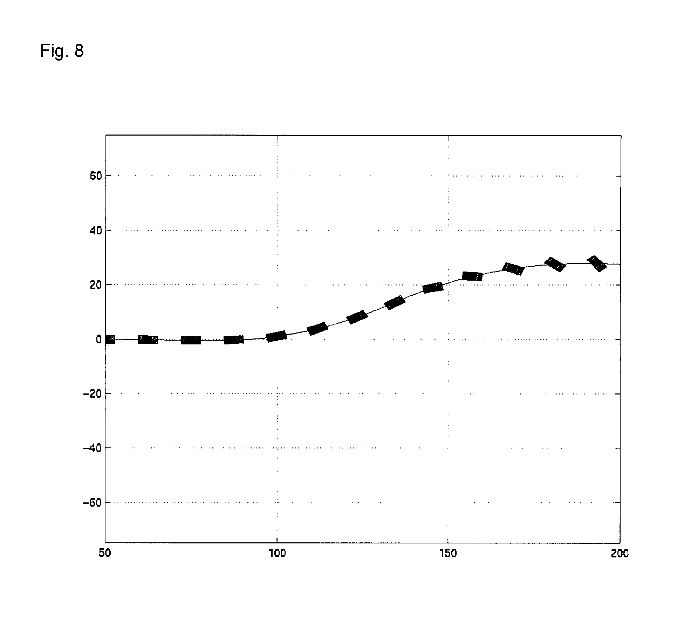

Dans la troisième simulation (figures 7a, 7b, 7c et 8), le conducteur effectue un changement de file sur sol mouillé et perd le contrôle de son véhicule. La détection de cette situation dangereuse peut aussi s'effectuer en remarquant l'écart entre les couples de lacet et efforts souhaités et les efforts réels subis par le véhicule.

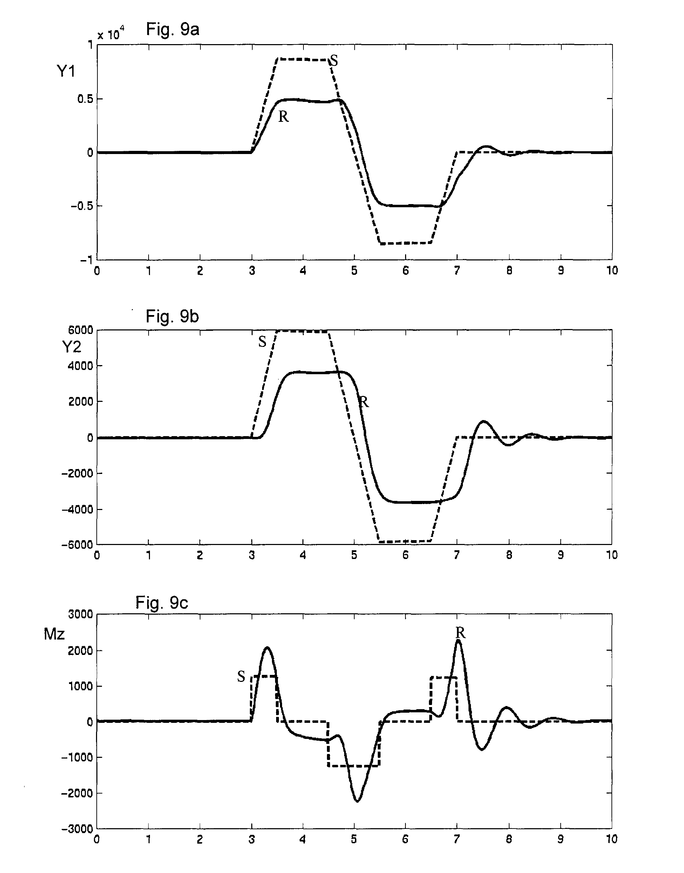

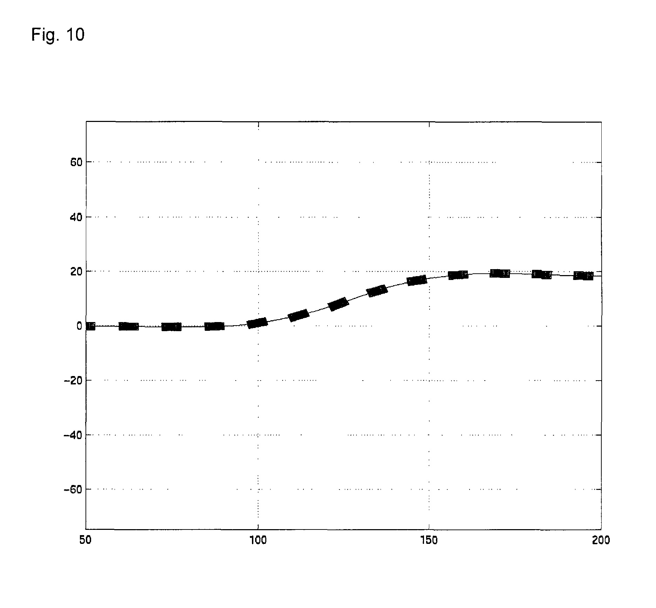

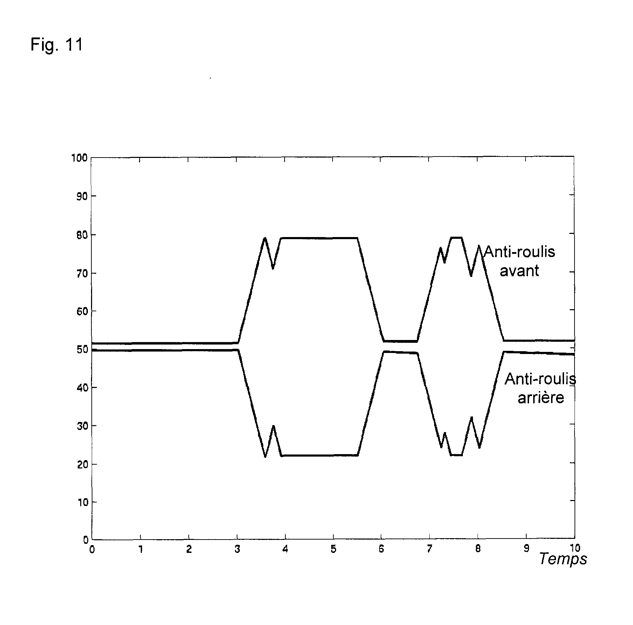

Dans la quatrième simulation (figure 9a, 9b, 9c, 10 et 11), on montre comment une modification de la répartition avant/arrière d'antiroulis, pilotée comme expliqué ci-dessus, permet de stabiliser la trajectoire du véhicule. La manoeuvre est identique à la précédente (évitement sur sol mouillé à 90 km/h). Dès la détection d'efforts réels trop importants en lacet, l'antiroulis est renforcé à l'avant du véhicule et allégé de la même quantité à l'arrière de manière à rendre le véhicule stable au plus vite et de mieux utiliser le potentiel d'adhérence des 4 pneumatiques . La saturation des poussées est mieux gérée et permet des déphasages moins importants, donc des couples de lacet mieux maîtrisé et des renvois de caisse mieux identifiés.

**Revendications**

1. Méthode de contrôle de la stabilité d'un véhicule , ledit véhicule comportant une caisse et au moins une liaison au sol avant et une liaison au sol arrière, chaque liaison au sol comportant au moins une roue, le véhicule étant pourvu d'actionneurs pour agir sur les forces transmises au sol par chacune des roues, comprenant les étapes suivantes :

   • relever en temps réel les poussées transversales « Y » agissant au centre de chacune des roues avant et arrière ;
   • à partir des commandes du conducteur du véhicule, calculer pour chacune des roues les poussées transversales « $Y_{souhaitées}$ » souhaitées ;
   • comparer les poussées transversales souhaitées aux poussées transversales relevées pour obtenir un signal d'erreur par rapport aux poussées transversales souhaitées et,
   • si les poussées d'un des essieux ne correspondent pas aux poussées transversales souhaitées, agir sur les actionneurs de façon à minimiser le signal d'erreur.

2. Méthode de contrôle de la stabilité d'un véhicule , ledit véhicule comportant une caisse et au moins une liaison au sol avant et une liaison au sol arrière, chaque liaison au sol comportant au moins une roue, le véhicule étant pourvu d'actionneurs pour agir sur les forces transmises au sol par chacune des roues, comprenant les étapes suivantes :

   • relever en temps réel les poussées transversales « Y » agissant au centre de chacune des roues avant et arrière, et calculer en temps réel le couple de lacet effectif imposé par les roues au véhicule ;

- relever en temps réel un signal au dispositif de commande du braquage et calculer le couple de lacet « $M_{souhaitée}$ » souhaité ;
- comparer les couples de lacet effectif et souhaité pour obtenir un signal d'erreur par rapport au couple de lacet souhaité et ;
- si le couple de lacet effectif est supérieur au couple de lacet souhaité, agir sur les actionneurs de façon à minimiser le signal d'erreur.

3. Méthode de contrôle de la stabilité d'un véhicule , ledit véhicule comportant une caisse et au moins une liaison au sol avant et une liaison au sol arrière, chaque liaison au sol comportant au moins une roue, le véhicule étant pourvu d'actionneurs pour agir sur les forces transmises au sol par chacune des roues, comprenant les étapes suivantes :

- Relever en temps réel les poussées transversales « Y » agissant au centre de chacune des roues avant et arrière,
- Relever en temps réel l'angle au volant,
- Calculer, en temps réel, le couple de lacet à partir des poussées transversales « Y » et des distances séparant le centre de gravité du véhicule des roues avant et arrière,
- Calculer, en temps réel, le gain de la vitesse de lacet par rapport à la vitesse de sollicitation du volant,
- Si le gain de la vitesse de lacet est inférieur à un premier seuil bas, commander les actionneurs pour augmenter le braquage du véhicule, et si le gain de la vitesse de lacet est supérieur à un premier seuil haut, commander les actionneurs pour diminuer le braquage du véhicule.

4. Méthode selon la revendication 1, dans laquelle le premier seuil bas est 0.1 et le premier seuil haut est 0.5.

5. Méthode de contrôle de la stabilité d'un véhicule selon l'une des revendications 1 à 3, ledit véhicule étant tel que chaque liaison au sol comporte un dispositif de suspension verticale autorisant le débattement de ladite roue par rapport à ladite caisse, des premiers moyens de contrôle du roulis agissant entre les roues de l'essieu avant, des deuxièmes moyens de contrôle du roulis agissant entre les roues de l'essieu arrière, dans laquelle l'étape consistant à agir sur les actionneurs comporte une modification dynamique de la répartition entre l'essieu avant et l'essieu arrière du roulis à effort global d'anti-roulis constant, la part d'antiroulis arrière étant diminuée pour diminuer le couple de lacet imposé par les roues au véhicule et inversement, de façon à amoindrir le signal d'erreur.

6. Méthode de contrôle de la stabilité d'un véhicule selon l'une des revendications 1 à 3, ledit véhicule étant tel qu'au moins un essieu comporte un moyen de braquage complémentaire des roues d'au moins un essieu, ledit moyen agissant indépendamment du dispositif de commande du braquage,
dans laquelle l'étape consistant à agir sur les actionneur comporte une commande dynamique dudit moyen de braquage complémentaire visant à modifier le couple de lacet imposé au véhicule par les roues, pour amoindrir le signal d'erreur.

7. Méthode de contrôle de la stabilité d'un véhicule selon l'une des revendications 1 à 3, ledit véhicule comportant des moyens pour appliquer un couple freineur sélectivement à chacune des roues,
dans laquelle l'étape consistant à agir sur les actionneur consiste à freiner au moins une des roues à l'extérieur du virage négocié par le véhicule pour diminuer le couple de lacet imposé par les roues au véhicule ou à freiner au moins une des roues à l'intérieur du virage négocié par le véhicule pour augmenter le couple de lacet imposé par les roues au véhicule, de façon à amoindrir le signal d'erreur.

Fig 1

| Vitesse du véhicule | Angle volant | | Vitesse d'angle volant |

**Poussées souhaitées par le conducteur sur chaque essieu :**

**Couple de lacet souhaité par le conducteur sur le véhicule :**

**Comparateur**

**Mesure des poussées réelles :**

**Contrôleur**

**Actionneurs**

**Véhicule**

Fig. 2

Fig. 3a

Fig. 3b

Fig. 3c

Fig. 4

Fig. 5a

Fig. 5b

Fig. 5c

Fig. 6

Fig 7a

Fig 7b

Fig 7c

Fig. 8

Fig. 9a

Fig. 9b

Fig. 9c

Fig. 10

Fig. 11

# EP 1 147 960 A1

**Office européen des brevets**

## RAPPORT DE RECHERCHE EUROPEENNE

Numéro de la demande

EP 01 10 8693

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 943 515 A (DAIMLER CHRYSLER AG) 22 septembre 1999 (1999-09-22) | 1,6 | B60T8/00 |
| Y | * page 3, ligne 4 - page 4, ligne 25 * | 5,7 | |
| A | * revendications 1,13 * | 3,4 | |
| X | US 6 021 367 A (PILUTTI THOMAS EDWARD ET AL) 1 février 2000 (2000-02-01) | 2 | |
| A | * revendications 1-3 * | 3,4 | |
| Y | DE 197 35 787 A (FORD GLOBAL TECH INC) 5 mars 1998 (1998-03-05) * page 3, ligne 59 - page 4, ligne 9 * * revendication 1 * | 5 | |
| Y | DE 196 01 795 A (TEVES GMBH ALFRED) 24 juillet 1997 (1997-07-24) * revendication 1 * | 7 | |
| A | US 5 229 944 A (YASUNO YOSHIKI) 20 juillet 1993 (1993-07-20) * revendications 1-3 * | 3 | |

**DOMAINES TECHNIQUES RECHERCHES (Int.Cl.7)**

| A | US 5 548 536 A (AMMON DIETER) 20 août 1996 (1996-08-20) * colonne 1, ligne 64 - colonne 2, ligne 14 * | 3 | B60T B60G |

Le présent rapport a été établi pour toutes les revendications

| Lieu de la recherche | Date d'achèvement de la recherche | Examinateur |
|---|---|---|
| LA HAYE | 18 juillet 2001 | Colonna, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

24

**ANNEXE AU RAPPORT DE RECHERCHE EUROPEENNE
RELATIF A LA DEMANDE DE BREVET EUROPEEN NO.**

EP 01 10 8693

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-07-2001

| Document brevet cité au rapport de recherche | | Date de publication | Membre(s) de la famille de brevet(s) | | Date de publication |
|---|---|---|---|---|---|
| EP 0943515 | A | 22-09-1999 | DE | 19812238 A | 23-09-1999 |
| | | | JP | 11334638 A | 07-12-1999 |
| US 6021367 | A | 01-02-2000 | AUCUN | | |
| DE 19735787 | A | 05-03-1998 | US | 5852787 A | 22-12-1998 |
| | | | GB | 2316919 A,B | 11-03-1998 |
| DE 19601795 | A | 24-07-1997 | DE | 59701510 D | 31-05-2000 |
| | | | WO | 9726165 A | 24-07-1997 |
| | | | EP | 0873257 A | 28-10-1998 |
| US 5229944 | A | 20-07-1993 | DE | 4109522 A | 26-09-1991 |
| | | | FR | 2659920 A | 27-09-1991 |
| | | | GB | 2242949 A,B | 16-10-1991 |
| | | | JP | 2712786 B | 16-02-1998 |
| | | | JP | 3281467 A | 12-12-1991 |
| US 5548536 | A | 20-08-1996 | DE | 4216301 A | 18-11-1993 |
| | | | GB | 2266957 A,B | 17-11-1993 |

Pour tout renseignement concernant cette annexe : voir Journal Officiel de l'Office européen des brevets, No.12/82